# EUROPEAN PATENT APPLICATION

(11) **EP 1 667 085 A1**
(43) Date of publication of application: **07.06.2006**
(21) Application number: 04787985.3
(22) Date of filing: 22.09.2004
(51) Int. Cl.: G08G 1/16

(54) **DEVICE FOR DETECTING ROAD TRAVELING LANE**

(30) Priority: 24.09.2003 JP 2003331356
(71) Applicant: AISIN SEIKI KABUSHIKI KAISHA, Kariya-shi, Aichi 448-8650 (JP)
(72) Inventor: KAKINAMI, Toshiaki, c/o AISIN SEIKI K.K., Kariya-shi, Aichi 4488650 (JP); HIRAMAKI, Takashi, c/o AISIN SEIKI K.K., Kariya-shi, Aichi 4488650 (JP); AKITA, Tokihiko, c/o AISIN SEIKI K.K., Kariya-shi, Aichi 4488650 (JP)
(74) Representative: TBK-Patent
(86) International application number: PCT/JP2004/013802
(87) International publication number: WO 2005/029440

(57) **Abstract**

A device for detecting a road traveling lane, which is capable of stably defining a position of a boundary of a traveling lane. Edge point detection means (ED) detects a plurality of edge points in a contour on an image, and segment group producing means (SD) produces a line segment on the basis of continuity of distance and direction between neighboring edge points, and groups a plurality of line segments having a predetermined relationship with each other, to produce a segment group. Further, curve detection means (CD) detects a curve fitted to the segment group. Then, when a segment group forming a curve closest to the center of the traveling lane has a predetermined length and repeated cycle, lane boundary position defining means (LD) defines the segment group as the innermost marking line, and defines a position of a neighboring curve outside of the innermost marking line as the position of the boundary of the traveling lane.

## Description

### TECHNICAL FIELD

The present invention relates to a device for detecting a road traveling lane, particularly to the device for detecting the traveling lane from images continuously picked up on a road surface in front of a vehicle.

### BACKGROUND ART

For an automatic control of an automobile, or a driving assistance to a driver or the like, it is important to detect a road traveling lane appropriately and stably, from images taken by a camera. Normally, marking lines are painted on a road surface in accordance with various objects, such as lane boundary lines for defining a boundary of a traveling lane (traffic lane), to be mixed with solid lines or broken lines, marking lines made in a different form such as a block-like form, marking lines of different colors such as white or yellow, and further a complex of those marking lines.

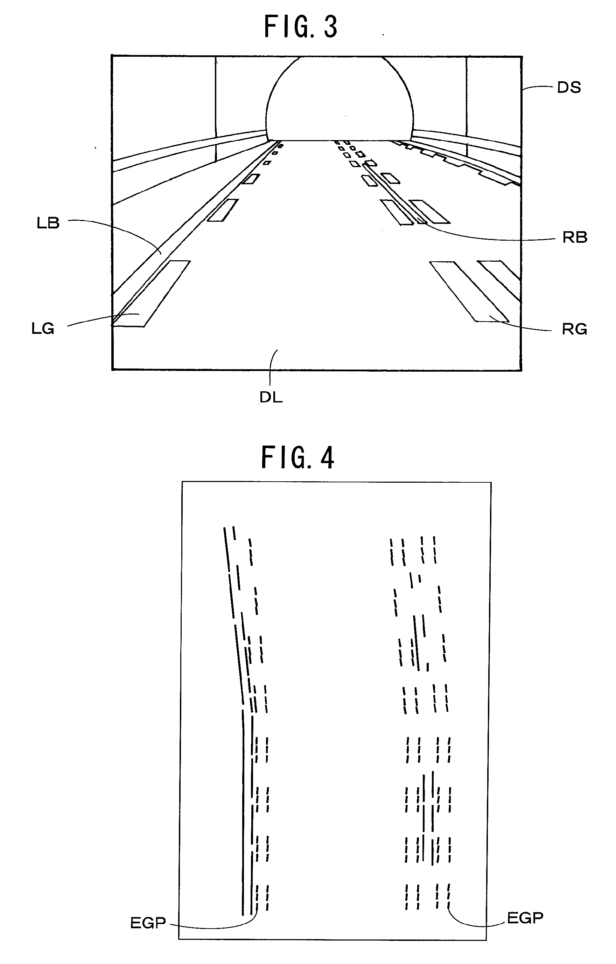

For instance, FIG.3 shows an example of an image (DS) including marking lines on a road with 2 vehicle lanes in the vicinity of a tunnel. As a lane boundary line (LB) indicative of a left boundary of a traveling lane (DL), a marking line of a white or yellow rigid line, at the inner side of which a marking line of a white block-like marking line has been used for a traveling guide line (LG). Also, as a lane boundary line (RB) indicative of a right boundary of a traveling lane (DL), a marking line of a white or yellow broken line, at the inner side of which a marking line of a white block-like marking line has been used for a traveling guide line (RG). In general, each width of those lanes is set to be 20cm, the length of a painted portion of the marking line of broken line is set to be 8m, and each space portion between the painted portions is set to be 12m. The width of the block-like marking line is set to be 30cm, the length of its painted portion is set to be 2-3m, and each space portion between the painted portions is set to be 2-3m. In the present application, the lane boundary line or the traveling guide line is meant by the marking line as viewed from its function, whereas when the white line or yellow line on the road surface itself is indicated, it is called as a lane mark.

With respect to the device for detecting the road traveling lane which is defined by the various marking lines as described above, various types have been proposed in the past, as disclosed in Patent document 1, for example. In this document, with respect to a vehicle lane determination device and a vehicle controller, in order to properly set a predetermined reference line for a vehicle, from a plurality of marking lines which are detected and adjacent to each other, it is so constituted as follows. That is, it is so described that the marking lines drawn on the surface of a road is detected from an image taken by a camera, and the marking lines to be a pair of white lines dividing a traveling lane are extracted from them. Then, the interval between the pair of marking lines extracted as the white lines is detected. Under a situation where the interval between the pair of marking lines extracted as the white lines is detected, when the plurality of marking lines adjacent to each other are detected on at least one side of the road from the image taken by the camera, based on the interval between the pair of marking lines as the white lines detected at that time, the pair of marking lines having an interval closest to the interval are extracted as the white lines.

Also, in Patent document 2, in order to detect a traffic lane boundary stably, there is proposed such a traffic lane boundary detector as constituted below. That is, it is provided with first contour line information detection means, sensitivity of which is set for spatial density change of original image data comparatively high and extracts a first contour line information from the image data, second contour line information detection means, sensitivity of which is set for spatial density change of original image data comparatively low and extracts a second contour line information from the image data, and contour extraction means for extracting outermost contour information of a group of white lines from the first and second contour line information detection means, so that the position of traffic lane boundary is set on the basis of the outermost contour information. It is so described that one includes information about edges corresponding to gaps between white lines, with the sensitivity being set for spatial density change to be high, whereas the other one does not include it, so that cancellation of the information about edges corresponding to the gaps will be easily made.

Furthermore, in Patent document 3, for the same object as described above, there is proposed such a traffic lane boundary detector as constituted below. That is, an outermost contour extraction section (reference numeral 15 in the Patent document 3. Same, hereinafter) extracts an outermost contour information of a group of white lines based on the contour data including the original image data stored in a frame buffer section (13) and the positional information of edge detected by an edge detection section (14). It is described that the outermost contour extraction section (15) determines whether or not the edge corresponds to the gaps generate between the white lines to constitute the group of white lines, based on the contour data including the positional information of the edge extracted from the original image data, and deletes the edge corresponding to the gaps from the contour data.

And, in Patent document 4, for the same object as described above, there is proposed a device for detecting a traffic lane boundary as constituted below. That is, a traveling lane of a mobile body including traffic lane in a predetermined area is taken by image pickup means, to obtain image data. Based on the obtained image data, density histograms are provided, and aggregation of density histograms is detected, to be grouped. Then, among the grouped histograms, first center positions which are the centers of individual histograms, are detected, and based on the first center positions, second center positions which correspond to the centers in the grouped aggregation of histograms, are detected. Furthermore, it is described that based on the second center positions between the histograms in different groups of histograms, the center of a lane mark or lane mark groups having a plurality of lane marks is detected, to determine the position of the lane mark boundary, so that a stable detection of the lane mark boundary can be achieved, with the histograms produced on the basis of the image data.

On the other hand, with respect to an image processing technique, Hough conversion has been widely known as a method for detecting a straight line, as explained in Non-patent document 1 as listed below, for example. The Hough conversion has been known as the method for detecting a straight line to be robust against noise, and
characterized in that during a process for converting points on a (x, y) coordinate system into a curve on a (p, θ) polar coordinate system, the curve on the (ρ, θ) polar coordinate system converted from edge points provided on a common straight line on the (x, y) coordinate system, intersects at a single point. Furthermore, recently, in a computer vision, RANSAC (Random Sample Consensus) which is a kind of Robust paradigm, has become popular, as explained in detail in Non-patent document 2 as listed below, for example. Also, RANSAC has been explained in Non-patent document 3 as listed below.

Patent document 1:
Japanese Patent Laid-open Publication 2003-168198
Patent document 2:
Japanese Patent Laid-open Publication 2003-187227
Patent document 3:
Japanese Patent Laid-open Publication 2003-187252
Patent document 4:
Japanese Patent Laid-open Publication 2003-178399
Non-patent document 1:
Pages 127 and 128 of "Introduction to Computer Image Processing" edited by Hideyuki Tamura, first issue, first print, published by Soken Shuppan, on March 10, 1985
Non-patent document 2:
Pages 381-395 of "Random Sample Consensus: A Paradigm for Model Fitting with Applications to Image Analysis and Automated Cartography" written by Martin A. Fischero and Robert C. Bolles, vol.24(6), published by Graphics and Image Processing, in 1981
Non-patent document 3:
Pages 101-107 of "Multiple View Geometry in Computer Vision" written by Richard Hartley and Andrew Zisserman, published by Cambridge University Press., in August, 2000

### DISCLOSURE OF THE INVENTION

### PROBLEMS TO BE SOLVED BY THE INVENTION

In the Patent document 1 as cited above, it is described that when the plurality of marking lines adjacent to each other are detected on at least one side of the road, based on the interval between the pair of marking lines as the white lines detected at that time, the pair of marking lines having the interval closest to the interval are extracted as the white lines, so that it is set to be prerequisite that the interval between the opposite marking lines is constant. And, it is not easy to define a reference line among the plurality of marking lines, so that a further improvement is required.

Also, in the Patent document 2 as cited above, it is described that through two kinds of methods for detecting the outermost contour, with the sensitivity thereof being set to be different for spatial density change, the outermost contour position is defined, with the sensitivity for the intervals among the plurality of marking lines being lowered. It is very difficult to detect the marking line provided on the original lane boundary, although it is possible to define the outermost contour position stably, even if contrast between the marking line and the interval is insufficient, or it is saturated to destroy the images.

Furthermore, according to the device as described in the Patent document 3, it has been so constituted that the outermost contour position is extracted, with the data being neglected to be employed, in the case where the intervals between the edges are narrow, and the difference in density between the opposite edge positions is small. Therefore, it is very difficult to detect the marking line provided on the original lane boundary, although it is possible to define the outermost contour position stably, like in the above-described case.

Then, according to the device as described in the Patent document 4, it has been so constituted that the histograms of edges obtained by differentiating the image are produced to be grouped, to detect the center positions of individual marking lines, or the center positions for the groups, to employ the center line or inner most position as the reference line depending on the number of marking lines. It can be hardly said that it is fully responsive to the requirement for stably defining the position of the lane boundary. Especially, as the block-like marking line shown in FIG.3 is as wide as 30cm, supposing that this block-like marking line is recognized as the lane boundary on the opposite sides of the traveling lane, the lane width (width between the traffic lines), including the interval between the block-like marking line and the actual lane boundary, will become narrower by 1m or less, comparing with the actual lane width, so that there may be a case where it is difficult to achieve a smooth traveling control or the like. Therefore, it is necessary to define the block-like marking lines against the boundary of traveling lane.

Accordingly, in a device for detecting a road traveling lane from images continuously picked up on a road surface in front of a vehicle, it is an object of the present invention to provide the device for detecting the road traveling lane, which is capable of stably defining a position of a boundary of the traveling lane.

### MEANS FOR SOLVING THE PROBLEMS

In accomplishing the above-described object, in a device for detecting a road traveling lane from images on a road surface continuously picked up by image pickup means, the present invention comprises edge point detection means for detecting a plurality of edge points in a contour on the image, segment group producing means for providing a line segment for the plurality of edge points detected by said edge point detection means, on the basis of continuity of distance and direction between neighboring edge points, and grouping a plurality of line segments having a predetermined relationship with each other, to produce a segment group, curve detection means for detecting a curve fitted to the segment group produced by said segment group producing means, and lane boundary position defining means for comparing a plurality of curves distributed in the vicinity of right and left lane boundaries out of the curves detected by said curve detection means, with the segment groups produced by said segment group producing means, to define an innermost marking line, when a segment group forming a curve closest to the center of said traveling lane has a predetermined length and repeated cycle, and define a position of a neighboring curve outside of said innermost marking line relatively to the center of said traveling lane, as a position of a boundary of said traveling lane. In this connection, the above-described curve includes the one with a plurality of straight lines substantially forming the curve. The plurality of line segments having the predetermined relationship with each other are the ones which are capable of selecting the line segments, which are provided in an area of a predetermined distance and direction, for example, relative to predetermined line segments, in sequence.

Accordingly, in the device for detecting a road traveling lane, said segment group producing means may be constituted by producing said segment group for a group including a predetermined line segment and another line segment provided in an area of the predetermined distance and direction relative to the predetermined line segments in said plurality of line segment. Or, said segment group producing means may be constituted by providing said line segment for a group of edge points including the plurality of edge points detected by said edge point detection means, on the basis of continuity of distance and direction between neighboring edge points. Also, said segment group producing means may be constituted by determining that there is a predetermined relationship, to be processed as one group, when there is another line segment in an area of the predetermined distance and direction relative to a predetermined line segment, in a group of line segments based on said plurality of line segments.

Furthermore, in a device for detecting a road traveling lane from images continuously picked up by image pickup means, the present invention may comprise edge point detection means for detecting a plurality of edge points from a contour on the images, curve detection means for detecting curves fitted to the plurality of edge points detected by said edge point detection means, segment group producing means for grouping groups of edge points contributed to the curves detected by said curve detection means, to produce segment groups, and lane boundary position defining means for comparing a plurality of curves distributed in the vicinity of right and left lane boundaries out of the curves detected by said curve detection means, with the segment groups produced by said segment group producing means, to define an innermost marking line, when a segment group produced for a curve closest to a center of said traveling lane indicates a predetermined length and repeated cycle, and define a position of a neighboring curve outside of said innermost marking line relatively to the center of said traveling lane, as a position of a boundary of said traveling lane.

And, said segment group producing means may be constituted by providing an edge histogram for the groups of edge points provided for the curves detected by said curve detection means, and groups the groups of edge points contributed to peaks of said histogram, to produce segment groups. Preferably, the above-described edge histogram is a horizontal edge histogram to be formed in a horizontal direction, to vertical components of the above-described groups of edge points.

Furthermore, said edge point detection means may be constituted by detecting the plurality of edge points on the image picked up by said image pickup means, and making a reverse projection of coordinate data of the plurality of edge points on a 3-dimensional road surface coordinate, to provide said plurality of edge points.

### EFFECTS OF THE INVENTION

As the present invention is constituted as described above, the following effects will be achieved. That is, as the innermost marking line is defined, when the segment group forming the curve closest to the center of the traveling lane indicates the predetermined length and repeated cycle, and the position of the neighboring curve outside of the innermost marking line relatively to the center of the traveling lane is defined, as the position of the boundary of the traveling lane, the block-like marking line provided with the segment groups having the predetermined length and repeated cycle, can be separated from the boundary of the traveling lane, and removed certainly. Therefore, the position of the boundary of the traveling lane can be defined stably.

With the segment group producing means being constituted as described above, the segment groups can be produced appropriately. Also, with the edge point detection means being constituted as described above, the plurality of edge points can be detected and processed appropriately.

### BRIEF DESCRIPTION OF THE DRAWINGS

FIG.1 is a block diagram showing main components of a device for detecting a road traveling lane according to an embodiment of the present invention.
FIG.2 is a block diagram showing a hardware of a device for detecting a road traveling lane according to an embodiment of the present invention.
FiG.3 is a front view of an example of an image picked up according to an embodiment of the present invention.
FIG.4 is a plan view showing a plurality of edge points projected on a road surface coordinate according to an embodiment of the present invention.
FIG.5 is a plan view showing line segments projected on a road surface coordinate according to an embodiment of the present invention.
FIG.6 is a plan view showing an example of grouping line segments according to an embodiment of the present invention.
FIG.7 is a plan view showing lane marks projected on a road surface coordinate, and a graph showing horizontal histograms corresponding to them, according to another embodiment of the present invention.

- VD:: image pickup means
- ED:: edge point detection means
- SD:: segment group producing means
- CD:: curve detection means (CD)
- LD:: lane boundary position defining means
- CM:: camera
- VB:: video input buffer circuit
- SY:: synchronous separation circuit
- FM:: frame memory
- VC:: image processing section
- VP:: image data control section
- EP:: edge point detection section
- CP:: curve detection section
- SP:: segment group producing section
- LP:: lane boundary position defining section

### BEST MODE FOR CARRYING OUT THE INVENTION

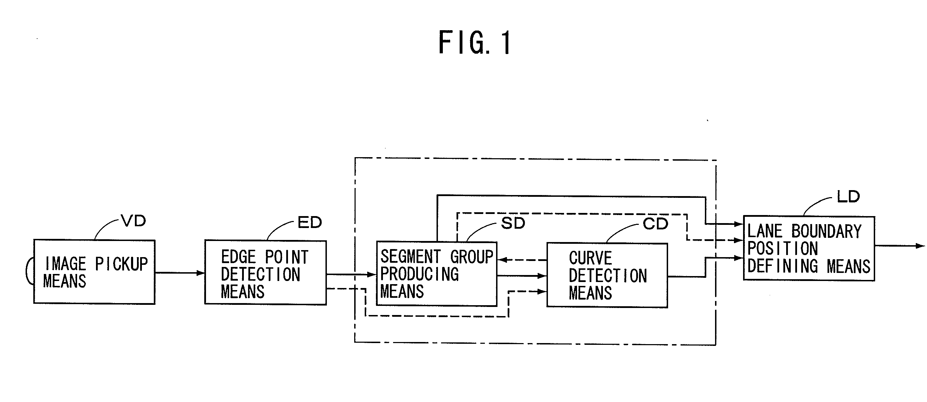

A practical embodiment of the device for detecting a road traveling lane of the present invention as constituted above will be described hereinafter with reference to the drawings. FIG.1 shows an embodiment of the device which is adapted to pick up images on a road surface continuously by image pickup means (VD), and detect a traveling lane from the picked up image. According to the present embodiment, it is provided with edge point detection means (ED) which detects a plurality of edge points in a contour on the image, segment group producing means (SD) which provides a line segment for the plurality of edge points detected by the edge point detection means (ED), on the basis of continuity of distance and direction between neighboring edge points, and which groups a plurality of line segments having a predetermined relationship with each other, to produce a segment group, and curve detection means (CD) which detects a curve fitted to the segment group produced by the segment group producing means (SD). And, according to lane boundary position defining means (LD), it is so constituted to compare a plurality of curves distributed in the vicinity of right and left lane boundaries out of the curves detected by the curve detection means (CD), with the segment group produced by the segment group producing means (SD), to define an innermost marking line, when a segment group produced for a curve closest to a center of the traveling lane indicates a predetermined length and repeated cycle, and define a position of neighboring curve outside of the innermost marking line relatively to the center of the traveling lane, as a position of a boundary of the traveling lane.

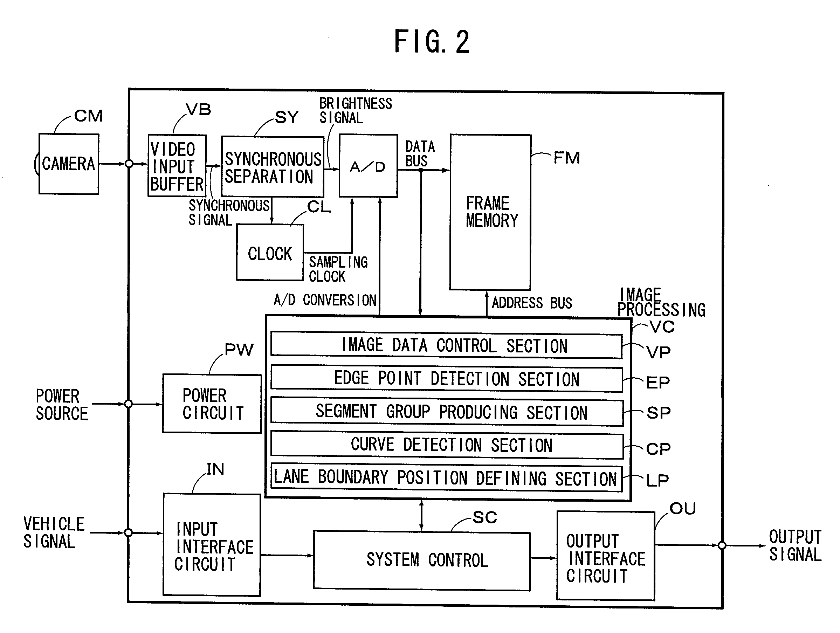

The device for detecting a road traveling lane as shown in FIG.1 has a hardware as shown in FIG.2. That is, in front of a vehicle which is not shown herein, as for the image pickup means (VD), a CCD camera (hereinafter, simply referred to as camera) CM is installed, for example, whereby images of the view in front of the vehicle including the road surface are picked up continuously. The image signals of the camera (CM) are converted from analogue signals to digital signals through a video input buffer circuit (VB) and synchronous separation circuit (SY), and stored in a frame memory (FM). The image data stored in the frame memory (FM) are processed by an image processing section (VC). The image processing section (VC) is constituted by an image data control section (VP), edge point detection section (EP), segment group producing section (SP), curve detection section (CP) and lane boundary position defining section (LP). The edge point detection section (EP), segment group producing section (SP), curve detection section (CP) and lane boundary position defining section (LP) correspond to the edge point detection means (ED), segment group producing means (SD), curve detection means (CD) and lane boundary position defining means (LD) as shown in FIG.1, respectively.

According to the image processing section (VC), the image data in the frame memory (FM) are addressed by the image data control section (VP) and sent to the edge point detection section (EP), where a plurality of edge points are detected. According to the present embodiment, a line segment is provided for the detected data of edge points, by the segment group producing means (SD), on the basis of continuity of distance and direction between neighboring edge points, and a plurality of line segments having a predetermined relationship with each other are grouped to produce a segment group. Further, a curve, which is fitted to the segment group produced by the segment group producing means (SD), is detected by the curve detection means (CD). Then, according to the lane boundary position defining section (LP), a plurality of curves distributed in the vicinity of right and left lane boundaries are selected from the curves, which were detected by the curve detection section (CP) as described above, and the plurality of curves and the segment group produced by the segment group producing section (SP) are compared, so that when a segment group forming a curve closest to the center of the traveling lane indicates predetermined length and repeated cycle, an innermost marking line is defined. Accordingly, a position of neighboring curve outside of the innermost marking line relatively to the center of the traveling lane, is defined as a position of a boundary of the traveling lane.

The position of the boundary of the traveling lane as defined above is fed to a system control section (SC, computer), together with the detected results of a width of the traveling lane, radius of curvature of the road, position relative to the own vehicle, attitude angle or the like, additionally if necessary, and output to an outside system devices (not shown) through an output interface circuit (OU). Furthermore, (CL), (PW), (IN) in FIG.2 are clock circuit, electric power source circuit, and input interface circuit, respectively.

Hereinafter, will be explained processes in each of the edge point detection section (EP), segment group producing section (SP), curve detection section (CP) and lane boundary position defining section (LP) as described above. At the outset, according to the edge point detection section (EP), a plurality of edge points are detected from the image (DS) picked up by the camera (CM), as shown in FIG.3, and a reverse projection is made from an image plane (not shown) of the plurality of edge points on a 3-dimensional road surface coordinate. That is, on the basis of the plurality of edge points detected on the image plane and parameters of the camera (CM), coordinate data of the plurality of edge points are reversely projected as a group of points on a coordinate of the 3-dimensional road surface as shown in FIG.4 (line segments in FIG.4 represent the group of edge points). As there may be a case where portions of neighboring white lines are connected together, because the white lines (LB, LG, RB, RG in FIG.3) have become hardly visible or dirty, or due to performance of the camera (CM) or the like. As shown at an upper part of FIG.4, therefore, the group of edge points could be different from the one as shown at a lower part of FIG.4, but it can be determined appropriately without causing any error, by a process as will be described later.

In the curve detection section (CP), a curve including a plurality of straight lines is fitted to the plurality of edge points (represented by EGP in FIG.4) which are reversely projected on the surface of the road, according to the aforementioned RANSAC, for example, to apply a curve-fitting. As for this fitting of the curve (curve-fitting), the aforementioned Hough conversion may be used, or for instance, a least square method can be used. Also, the plurality of edge points (EGP) may be grouped on the basis of a predetermined property, and applied with the curve-fitting.

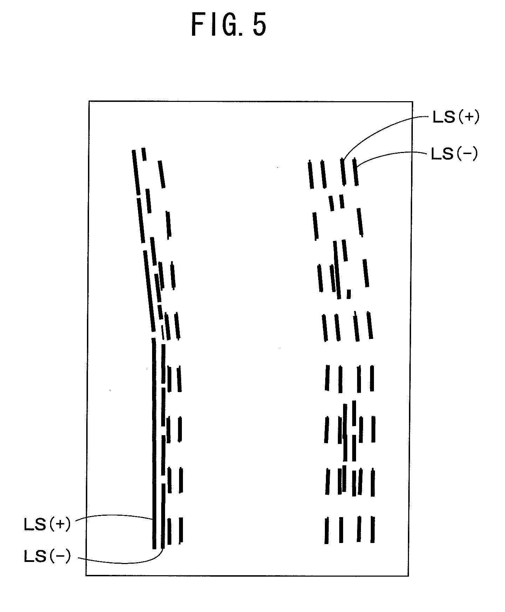

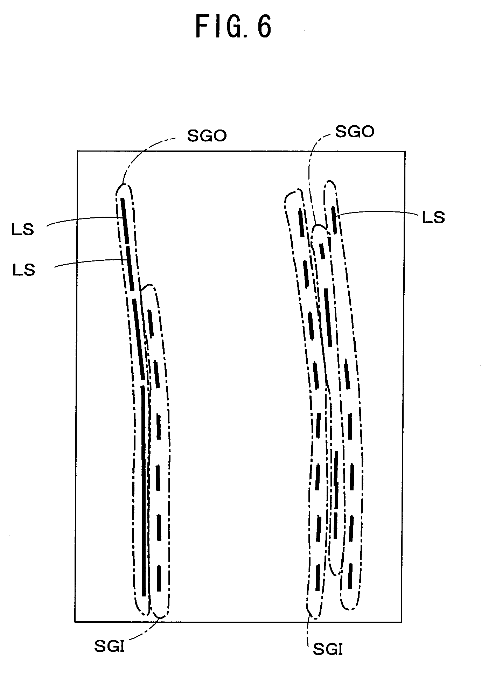

Furthermore, in the segment group producing section (SP), line segments (LS) are provided for the plurality of edge points (EGP) as described above, on the basis of continuity of distance and direction between neighboring edge points, as shown in FIG.5. Next, in a group of line segments, if there is another line segment (LS) in an area of a predetermined distance and direction relative to a certain line segment (LS), those line segments (LS, LS) are processed to be included in the common group. With this process being repeated, a plurality of groups are provided, as shown in FIG.6 (the group at the inner side relative to the lane center is indicated by "SGI", and the group at the outer side is indicated by "SGO"). Although a plus edge (at the left side of the white line, as indicated by LS(+) in FIG.5) has been selected for grouping them in FIG.6, a minus edge (at the right side of the white line, as indicated by LS(-) in FIG.5) may be selected for grouping them, as well.

Then, the curve-fitting (fitting of the curve) is applied to the grouped line segments (LS). Also, in this case, they may be grouped on the basis of the predetermined property, and then applied with the curve-fitting. With the line segments evaluated, it can be proved what property the edge points constituting the curve detected by the curve detection section (CP) would provide. For example, if the curve of group (SGI) as shown in FIG.6 is constituted by a plurality of cyclic short line segments, it can be determined that the curve has been applied to a relatively short marking line such as the block-like marking line. Therefore, if it is determined that the line segment has a predetermined length and cycle in a longitudinal direction or a lateral direction, and if it is determined by the lane boundary position defining section (LP) that it is the block-like marking line, the curve (e.g., RG in FIG.3) is removed from the lane boundary to be, and it is determined that the curve (RB in FIG.3) which is outside of the block-like marking line (RG in FIG.3) relative to the lane center is the lane boundary.

According to the embodiment as described above, at the outset, line segments (LS) are obtained, and grouped to be applied with the curve-fitting, whereas may be employed such an embodiment constituted as shown by broken arrows in FIG. 1, wherein a curve fitted to a plurality of edge points is detected, and groups of edge points fitted to the curve are grouped to produce a segment group. That is, according to the image processing section (VC), a curve fitted to the plurality of edge points is detected at the curve detection section (CP), a horizontal edge histogram is provided for vertical components of the groups of edge points, and the groups of edge points contributed to a peak of the histogram are grouped to produce the segment group.

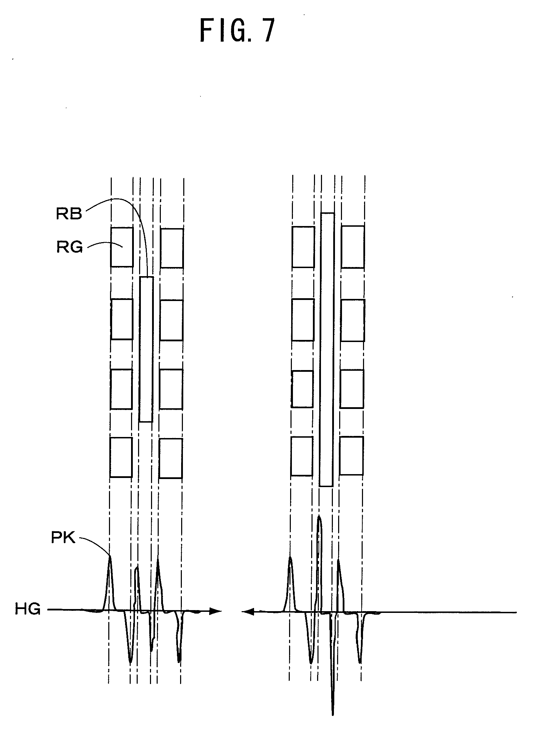

In practice, as for the plurality of edge points which are reversely projected on the surface of the road with 3-dimensional coordinate, the horizontal edge histogram is provided, as indicated by (HG) in FIG.7. According to this embodiment, a plurality of peaks (PK) appear as shown in FIG.7. As many vertical components are included at each peak position, the edge groups contributed to each histogram can be grouped to provide one group. Accordingly, in the case where the peaks of the histogram have a predetermined length and cycle in a longitudinal direction (or a lateral direction), so that it is determined at the lane boundary position defining section (LP) that it is the block-like marking line, then the marking line (RG) is removed from the lane boundary to be, instead, the marking line (RB) which is outside of the block-like marking line (RG) relatively to the lane center is employed as the lane boundary.

As described above, as for the marking lines for indicating the lane boundary provided on the traveling road surface, other than simple rigid lines and broken lines, there exist a plurality of lines in combination of the simple marking lines and the block-like marking lines. According to the prior apparatus, therefore, it was difficult to define the marking line (lane boundary line) as required to indicate as the lane boundary, stably. In any of the embodiments as described above in the present application, however, the position of the lane boundary line can be defined stably. Consequently, can be achieved determination of the boundary satisfied with high reliability as required by a warning system or a control system.

### POSSIBILITY OF INDUSTRIAL APPLICATION

As the device for detecting a road traveling lane according to the present invention, the position of the lane boundary line on the traveling lane can be defined stably, it can be applied to various warning systems and control systems of vehicles or the like, for example.

## Claims

1. A device for detecting a road traveling lane, from images on a road surface continuously picked up by image pickup means, comprising:
edge point detection means for detecting a plurality of edge points in a contour on the image;
segment group producing means for providing a line segment for the plurality of edge points detected by said edge point detection means, on the basis of continuity of distance and
direction between neighboring edge points, and grouping a plurality of line segments having a predetermined relationship with each other, to produce a segment group; curve detection means for detecting a curve fitted to the segment group produced by said segment group producing means; and
lane boundary position defining means for comparing a plurality of curves distributed in the vicinity of right and
left lane boundaries out of the curves detected by said curve detection means, with the segment groups produced by said segment group producing means, to define an innermost marking line, when a segment group forming a curve closest to the center of said traveling lane has a predetermined length and repeated cycle, and define a position of a neighboring curve outside of said innermost marking line relatively to the center of said traveling lane, as a position of a boundary of said traveling lane.

2. A device for detecting a road traveling lane as described in claim 1, wherein said segment group producing means produces said segment group for a group including a predetermined line segment and another line segment provided in an area of the predetermined distance and direction relative to the predetermined line segments in said plurality of line segment.

3. A device for detecting a road traveling lane as described in claim 1, wherein said segment group producing means provides said line segment for a group of edge points including the plurality of edge points detected by said edge point detection means, on the basis of continuity of distance and direction between neighboring edge points.

4. A device for detecting a road traveling lane as described in claim 1, wherein said segment group producing means determines that there is a predetermined relationship, to be processed as one group, when there is another line segment in an area of the predetermined distance and direction relative to a predetermined line segment, in a group of line segments based on said plurality of line segments.

5. A device for detecting a road traveling lane as described in claim 1, wherein said curve detection means applies a curve-fitting to the grouped line segments, to detect said curve.

6. A device for detecting a road traveling lane as described in claim 1, wherein said lane boundary position defining means determines if said line segments have a predetermined length and cycle in a longitudinal direction or a lateral direction to provide a block-like marking line, and removes said block-like marking line from a lane boundary to be, when said lane boundary position defining means determines affirmatively, and wherein said lane boundary position defining means determines that the curve provided outside of said block-like marking line relatively to the center of said traveling lane is said boundary of said traveling lane.

7. A device for detecting a road traveling lane as described in claim 1, wherein said edge point detection means detects the plurality of edge points on the image picked up by said image pickup means, and makes a reverse projection of coordinate data of the plurality of edge points on a 3-dimensional road surface coordinate, to provide said plurality of edge points.

8. A device for detecting a road traveling lane, from images continuously picked up on the road by image pickup means, comprising:
edge point detection means for detecting a plurality of edge points from a contour on the images;
curve detection means for detecting curves fitted to the plurality of edge points detected by said edge point detection means;
segment group producing means for grouping groups of edge points contributed to the curves detected by said curve detection means, to produce segment groups; and
lane boundary position defining means for comparing a plurality of curves distributed in the vicinity of right and
left lane boundaries out of the curves detected by said curve detection means, with the segment groups produced by said segment group producing means, to define an innermost marking line, when a segment group produced for a curve closest to a center of said traveling lane indicates a predetermined length and repeated cycle, and define a position of a neighboring curve outside of said innermost marking line relatively to the center of said traveling lane, as a position of a boundary of said traveling lane.

9. A device for detecting a road traveling lane as described in claim 8, wherein said segment group producing means provides an edge histogram for the groups of edge points provided for the curves detected by said curve detection means, and groups the groups of edge points contributed to peaks of said histogram, to produce segment groups.

10. A device for detecting a road traveling lane as described in claim 9, wherein said lane boundary position defining means determines if the peaks of said histogram have a predetermined length and cycle in a longitudinal direction or a lateral direction to provide a block-like marking line, and removes said block-like marking line from a lane boundary to be, when said lane boundary position defining means determines affirmatively, and wherein said lane boundary position defining means determines that the curve provided outside of said block-like marking line relatively to the center of said traveling lane is said boundary of said traveling lane.

11. A device for detecting a road traveling lane as described in claim 8, wherein said edge point detection means detects the plurality of edge points on the image picked up by said image pickup means, and makes a reverse projection of coordinate data of the plurality of edge points on a 3-dimensional road surface coordinate, to provide said plurality of edge points.
